(19) **Europäisches Patentamt / European Patent Office / Office européen des brevets**

(11) **EP 4 703 658 A1**

(12) **EUROPEAN PATENT APPLICATION**
published in accordance with Art. 153(4) EPC

(43) Date of publication:
**04.03.2026 Bulletin 2026/10**

(21) Application number: **24797050.2**

(22) Date of filing: **24.04.2024**

(51) International Patent Classification (IPC):
*F24V 30/00* (2018.01)

(52) Cooperative Patent Classification (CPC):
**F24V 30/00**

(86) International application number:
**PCT/JP2024/016036**

(87) International publication number:
**WO 2024/225304 (31.10.2024 Gazette 2024/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **26.04.2023  JP 2023072796**

(71) Applicant: **Clean Planet Inc.
Minato-ku
Tokyo 105-0022 (JP)**

(72) Inventors:
• **YOSHINO Shin
Tokyo 105-0022 (JP)**
• **SATO Masatoshi
Tokyo 105-0022 (JP)**

(74) Representative: **Bandpay & Greuter
11, rue Christophe Colomb
75008 Paris (FR)**

(54) **HEAT GENERATING DEVICE AND HEAT GENERATING METHOD**

(57)    Provided is a heat generating device and a heat generating method capable of securing a temperature of a heat generating element heated by a heater while reducing an influence of an environmental temperature and increasing heat generating efficiency of the heat generating element. The heat generating device includes: a heat generating element 14 in which a multilayer film that generates heat by occluding and discharging hydrogen is formed on a surface of a support including a plurality of cylinders having different diameters arranged apart from each other in a circumferential direction, or having a spiral cross section with a larger diameter toward an outer peripheral side; a heater 12 at a center of the heat generating element; a sealed container 11 housing the heat generating element; a cylindrical partition wall 13 provided between an inner wall surface of the sealed container and an outermost layer of the heat generating element; a supply line that supplies a gas containing hydrogen to the sealed container; and a discharge line that discharges the gas containing hydrogen, in which a space surrounded by a surface of the heater, a surface of the heat generating element, and an inner peripheral surface of the partition wall is filled with a thermally conductive substance 15 that does not inhibit hydrogen permeation, the inner wall surface 11a of the sealed container is subjected to a high emissivity treatment, and an outer peripheral surface of the partition wall is subjected to the high emissivity treatment, or the partition wall is made of a material with an emissivity of 0.6 or more.

FIG. 2

## Description

Technical Field

The present invention relates to a heat generating device and a heat generating method.

Background Art

It is known that a hydrogen storage alloy has properties of repeatedly occluding and discharging a large amount of hydrogen in a certain reaction condition, and is accompanied by significant reaction heat when occluding and discharging hydrogen. A heat utilization system such as a heat pump system, a heat transport system, and a cooling (freezing) system, or a hydrogen storage system, which utilizes the reaction heat, has been proposed (for example, see Patent Literatures 1 and 2).

The applicants have found that in a heat generating device including a heat generating element using a hydrogen storage alloy or the like, by configuring the heat generating element with a support and a multilayer film supported on the support, heat is generated when occluding hydrogen to the heat generating element and when discharging hydrogen from the heat generating element. The applicants have previously proposed a heat utilization system and a heat generating device based on such findings (see Patent Literature 3).

Specifically, the support provided in the heat generating element of the heat generating device is made of at least one of a porous body, a hydrogen permeable film, and a proton dielectric, and the multilayer film supported on the support, for example, is formed by alternately stacking a first layer that is made of a hydrogen storage metal or a hydrogen storage alloy and has a thickness of less than 1000 nm, and a second layer that is made of a hydrogen storage metal or a hydrogen storage alloy, which is different from that of the first layer, or ceramics and has a thickness of less than 1000 nm.

Citation List

Patent Literature

Patent Literature 1: JPS56-100276A
Patent Literature 2: JPS58-022854A
Patent Literature 3: JP6749035B

Summary of Invention

Technical Problem

However, in the heat generating device proposed in Patent Literature 3, it is required to secure a temperature of a heat generating element heated by a heater provided near the heat generating element to increase heat generating efficiency of the heat generating element while reducing an influence of an environmental temperature.

An object of the present invention is to provide a heat generating device and a heat generating method capable of securing a temperature of a heat generating element heated by a heater provided near the heat generating element while reducing an influence of an environmental temperature and increasing heat generating efficiency of the heat generating element.

Solution to Problem

A heat generating device according to the present invention includes: a heat generating element in which a multilayer film that generates heat by occluding and discharging hydrogen is formed on a surface of a support, the support being made of at least one of a porous body, a hydrogen permeable film, and a proton conductor, and the support including a plurality of cylinders having different diameters arranged apart from each other in a circumferential direction, or the support having a spiral cross section with a larger diameter toward an outer peripheral side; a columnar heater provided at a center of the heat generating element; a sealed container housing the heat generating element; a cylindrical partition wall provided between an inner wall surface of the sealed container and an outermost layer of the heat generating element inside the sealed container; a supply line that supplies a gas containing hydrogen to the sealed container; and a discharge line that discharges the gas containing hydrogen used for heat generation in the heat generating element by occluding and discharging the hydrogen in the heat generating element, in which a space surrounded by a surface of the heater, a surface of the heat generating element, and an inner peripheral surface of the partition wall is filled with a thermally conductive substance that does not inhibit hydrogen permeation, the inner wall surface of the sealed container is a surface subjected to a high emissivity treatment, and an outer peripheral surface of the partition wall is a surface subjected to the high emissivity treatment, or the partition wall is made of a material with an emissivity of 0.6 or more.

A heat generating method according to the present invention includes: accommodating, in a sealed container having an inner wall surface subjected to a high emissivity treatment, a heat generating element in which a multilayer film that generates heat by occluding and discharging hydrogen is formed on a surface of a support, the support being made of at least one of a porous body, a hydrogen permeable film, and a proton conductor, and the support including a plurality of cylinders having different diameters arranged apart from each other in a circumferential direction, or the support having a spiral cross section with a larger diameter toward an outer peripheral side; disposing a columnar heater at a center of the heat generating element; providing a cylindrical partition wall between the inner wall surface of the sealed container and an outermost layer of the heat generating element inside the sealed container, the cylindrical partition wall having an outer peripheral surface subjected to the high emissivity treatment or being made of a material with an emissivity of 0.6 or more; filling, with a thermally conductive substance that does not inhibit hydrogen permeation, a space surrounded by a surface of the heater, a surface of the heat generating element, and an inner peripheral surface of the partition wall; and supplying a gas containing hydrogen to the sealed container, causing the heat generating element to generate heat by occluding and discharging the hydrogen in the heat generating element, and discharging the gas containing hydrogen used for heat generation.

Advantageous Effects of Invention

According to the present invention, it is possible to provide a heat generating device and a heat generating method capable of securing a temperature of a heat generating element heated by a heater provided near the heat generating element to increase heat generating efficiency of the heat generating element while reducing an influence of an environmental temperature.

Brief Description of Drawings

Fig. 1 is a block diagram illustrating a configuration of a heat generating device according to an embodiment.
Fig. 2 is a cross-sectional view of a heat generating device main part that houses a heat generating element inside a sealed container.
Fig. 3 is a cross-sectional view illustrating a structure of the heat generating element.
Fig. 4 is a cross-sectional view illustrating a structure of a stacked body having a first layer and a second layer.
Fig. 5 is a diagram illustrating generation of excess heat.
Fig. 6 is a diagram illustrating a heat generating element having a first layer, a second layer, and a third layer according to a first modification.
Fig. 7 is a diagram illustrating a heat generating element having a first layer, a second layer, a third layer, and a fourth layer according to a second modification.
Fig. 8 is a block diagram illustrating a configuration of a heat generating device according to a third modification.
Fig. 9 is a cross-sectional view of a heat generating device main part that houses a heat generating element inside a sealed container according to a fourth modification.
Fig. 10 is a graph illustrating a temperature profile determined through simulation in a sealed container of a heat generating device according to a first experimental example.
Fig. 11 is a graph illustrating a temperature profile determined through simulation in a sealed container of a heat generating device according to a second experimental example.
Fig. 12 is a graph illustrating a temperature profile determined through simulation in a sealed container of a heat generating device according to a third experimental example.
Fig. 13 is a graph illustrating a temperature profile determined through simulation in a sealed container of a heat generating device according to a fourth experimental example.
Fig. 14 is a graph illustrating a temperature profile determined through simulation in a sealed container of a heat generating device according to a fifth experimental example.
Fig. 15 is a graph illustrating a temperature profile determined through simulation in a sealed container of a heat generating device according to a sixth experimental example.
Fig. 16 is a graph illustrating a temperature profile determined through simulation in a sealed container of a heat generating device according to a seventh experimental example.

Description of Embodiments

[Embodiment]

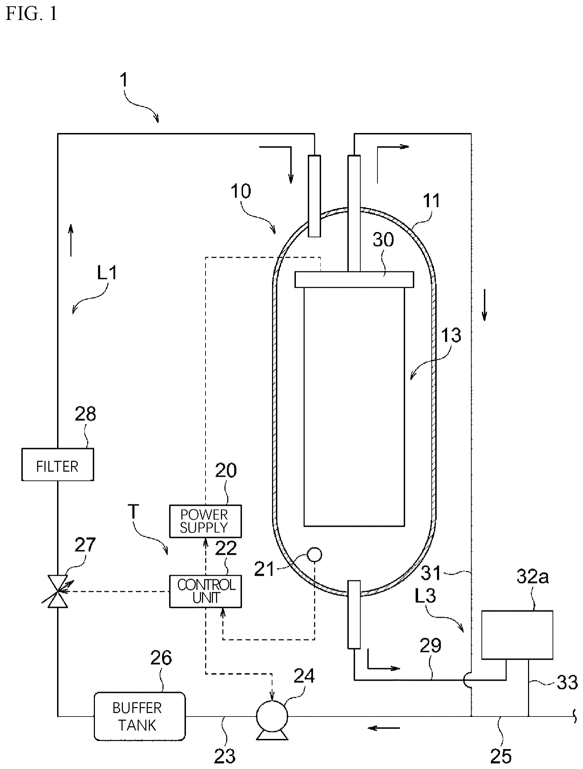

A heat generating device 1 according to the present embodiment will be described with reference to Fig. 1.

(Heat Generating Device 1)

Fig. 1 is a block diagram illustrating a configuration of the heat generating device 1 according to the present embodiment. The illustrated heat generating device 1 includes a heat generating device main part 10 that houses a heat generating element 14 (to be described later) inside a sealed container 11, a temperature adjustment unit T that adjusts a temperature of the heat generating element 14, a supply line L1 for supplying a gas containing hydrogen to the sealed container 11, a discharge pipe 29 constituting a discharge line for discharging the gas containing hydrogen in the sealed container 11, and a hydrogen recovery line L3 for returning to the supply line L1 and recovering hydrogen occluded in the heat generating element 14 and discharged from the heat generating element 14. Hereinafter, the gas containing hydrogen is referred to as a hydrogen-based gas.

(Heat Generating Device Main Part 10)

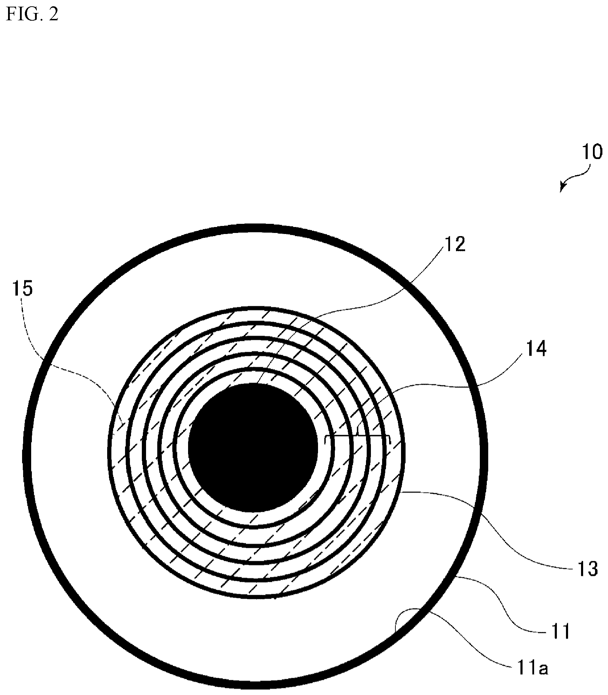

A structure of the heat generating element 14 housed in the sealed container 11 of the heat generating device 1 will be described with reference to Fig. 2. Fig. 2 is a cross-sectional view of the heat generating device main part 10 that houses the heat generating element 14 inside the sealed container 11. As illustrated in Fig. 2, the heat generating device main part 10 is configured such that a heater 12, a partition wall 13, and the heat generating element 14 are housed in the sealed container 11.

The heat generating element 14 has a configuration in which a multilayer film that generates heat by occluding and discharging hydrogen (to be described later) is formed on a surface of each of a plurality of cylindrical supports having different diameters that are made of at least one of a porous body, a hydrogen permeable film, and a proton conductor and are arranged apart from each other in a circumferential direction. Fig. 2 illustrates the heat generating element 14 having a four-layer structure including a four-layer cylindrical support, but the number of layers is not particularly limited. An interval between the heat generating elements 14 is not particularly limited, but for example, the heat generating elements 14 are provided such that distances between the adjacent heat generating elements 14 in the circumferential direction are equal to each other. The number of layers of the heat generating element 14 is not particularly limited, and may be, for example, 2 to 13.

The heater 12 has a columnar shape and is provided at a center of the heat generating element 14. The heater 12 is not limited to a columnar shape, and may be a columnar shape other than the columnar shape.

The partition wall 13 has a cylindrical shape and is provided between an inner wall surface 11a of the sealed container 11 and an outermost layer of the heat generating element 14 inside the sealed container 11. The partition wall 13 is made of, for example, the same material as that of the support constituting the heat generating element 14.

A space surrounded by a surface of the heater 12, a surface of the heat generating element 14, and an inner peripheral surface of the partition wall 13 is filled with a thermally conductive substance 15 that does not inhibit hydrogen permeation. The thermally conductive substance 15 is made of, for example, thermally conductive particles or a thermally conductive mesh. The thermally conductive particles are particles made of a thermally conductive substance such as metal or ceramics, and have an average particle diameter of, for example, 0.01 mm to 1 mm, specifically 0.1 mm. The thermally conductive mesh is, for example, a mesh made of a metal material such as a punching metal or a metal network structure having openings with an opening diameter of 0.1 mm to 10 mm, or a mesh made of a ceramic material having similar openings. Examples of the conductive material constituting the thermally conductive particles or the thermally conductive mesh include metals such as stainless steel, titanium, a nickel alloy, and gold (Au), or ceramic materials such as silicon nitride, silicon carbide, alumina, and zirconia.

The inner wall surface 11a of the sealed container 11 is a surface subjected to a high emissivity treatment. Specifically, the inner wall surface 11a of the sealed container 11 is a surface subjected to a blackening treatment. Examples of the blackening treatment include a black coating treatment such as Vantablack (Ocean Photonics, Inc.).

An outer peripheral surface of the partition wall 13 is a surface subjected to a high emissivity treatment, or the partition wall 13 is made of a material with an emissivity of 0.6 or more. Similarly to the inner wall surface 11a of the sealed container 11, the outer peripheral surface of the partition wall 13 may be a surface subjected to a high emissivity treatment such as a blackening treatment. Alternatively, when the partition wall 13 is made of a material with an emissivity of 0.6 or more, the outer peripheral surface of the partition wall 13 may not be subjected to the high emissivity treatment. Examples of the material with an emissivity of 0.6 or more include silicon nitride and silicon carbide. An emissivity of the heat generating element 14 is about 0.1 to 0.2, and an emissivity of the outer peripheral surface of the partition wall 13 is preferably greater than the emissivity of the heat generating element 14.

A cooling device (not illustrated) that cools the sealed container 11 from an outer periphery thereof with cooling water at a predetermined temperature is provided on an outer periphery of the sealed container 11.

(Heat Generating Element 14)

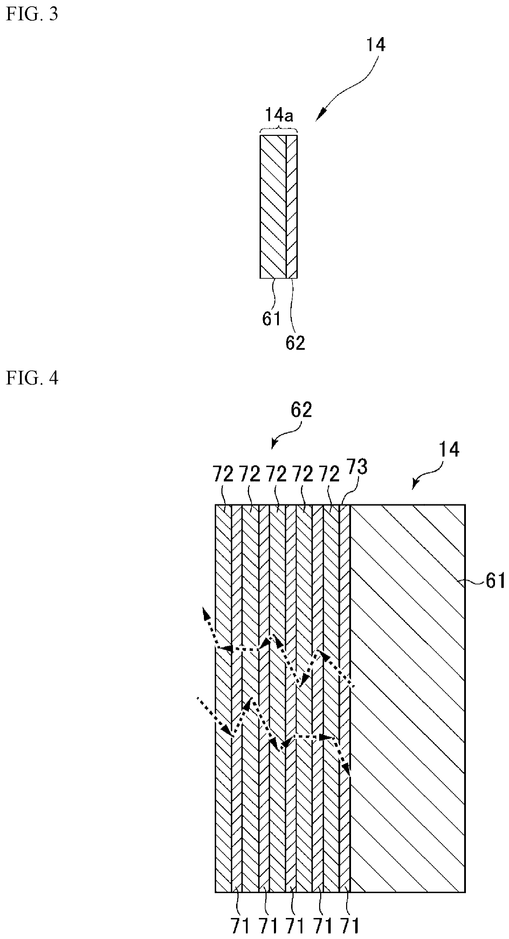

Next, a detailed structure of the heat generating element 14 will be described with reference to Figs. 3 and 4. As illustrated in Fig. 3, the heat generating element 14 has a stacked body 14a including a support 61 and a multilayer film 62.

Here, for example, a hydrogen-based gas of about 25°C is occluded in the heat generating element 14 and discharged from the heat generating element 14, whereby the hydrogen-based gas is heated by the heat generating element 14 and becomes a hydrogen-based gas of 50°C or higher and 1000°C or lower, preferably 600°C or higher and 1000°C or lower after permeating through the heat generating element 14. The hydrogen-based gas may be configured to permeate through the heat generating element 14. A direction in which the hydrogen-based gas permeates is not particularly limited. The hydrogen-based gas may permeate from the support 61 at the left end of the sheet toward the multilayer film 62 at the right end of the sheet, or the hydrogen-based gas may permeate from the multilayer film 62 at the right end of the sheet toward the support 61 at the left end of the sheet.

The support 61 may have any configuration that allows the hydrogen-based gas to be occluded in the heat generating element 14 and discharged from the heat generating element 14, and is made of at least one of a porous body, a hydrogen permeable film, and a proton conductor. In this example, the support 61 is formed in a plate shape having a front surface and a back surface. The porous body has, for example, pores having a size that allows the hydrogen-based gas to pass therethrough. The porous body is made of, for example, a metal, a non-metal, or ceramics. The porous body is preferably made of a material that does not hinder a reaction (hereinafter, referred to as a heat generating reaction) between the hydrogen-based gas and the multilayer film 62. The hydrogen permeable film is made of, for example, a hydrogen storage metal or a hydrogen storage alloy. Examples of the hydrogen storage metal include Ni, Pd, V, Nb, Ta, and Ti. Examples of the hydrogen storage alloy include $LaNi_5$, $CaCu_5$, $MgZn_2$, $ZrNi_2$, $ZrCr_2$, TiFe, TiCo, $Mg_2Ni$, and $Mg_2Cu$. The hydrogen permeable film includes a film having a mesh-like sheet. Examples of the proton conductor include a $BaCeO_3$-based conductor (for example, Ba $(Ce_{0.95}Y_{0.05})O_{3-\delta}$), a $SrCeO_3$-based conductor (for example, $Sr(Ce_{0.95}Y_{0.05})O_{3-\delta}$), a $CaZrO_3$-based conductor (for example, $CaZr_{0.95}Y_{0.05}O_{3-\alpha}$), a $SrZrO_3$-based conductor (for example, $SrZr_{0.9}Y_{0.1}O_{3-\alpha}$), $\beta Al_2O_3$, and $\beta Ga_2O_3$.

As illustrated in Fig. 4, the multilayer film 62 is provided on the support 61. The multilayer film 62 has a first layer 71 made of a hydrogen storage metal or a hydrogen storage alloy, and a second layer 72 made of a hydrogen storage metal or a hydrogen storage alloy different from the first layer 71, or ceramics. A heterogeneous material interface 73 to be described later is formed between the support 61 and the first layer 71, between the first layer 71 and the second layer 72, and between the support 61 and the second layer 72. In Fig. 4, the multilayer film 62 is formed by alternately stacking the first layer 71 and the second layer 72 in this order on one surface (for example, the front surface) of the support 61. The first layer 71 and the second layer 72 each have five layers. The number of layers of each of the first layer 71 and the second layer 72 may be changed as appropriate. The multilayer film 62 may be formed by alternately stacking the second layer 72 and the first layer 71 in this order on the front surface of the support 61. The multilayer film 62 preferably has one or more first layers 71 and one or more second layers 72, and one or more heterogeneous material interfaces 73 are preferably formed.

The first layer 71 is made of, for example, any one of Ni, Pd, Cu, Mn, Cr, Fe, Mg, Co, and an alloy thereof. An alloy for forming the first layer 71 is preferably an alloy made of two or more of Ni, Pd, Cu, Mn, Cr, Fe, Mg, and Co. The alloy for forming the first layer 71 may be an alloy obtained by adding an additive element to Ni, Pd, Cu, Mn, Cr, Fe, Mg, and Co.

The second layer 72 is made of, for example, any one of Ni, Pd, Cu, Mn, Cr, Fe, Mg, Co, an alloy thereof, and SiC. An alloy for forming the second layer 72 is preferably an alloy made of two or more of Ni, Pd, Cu, Mn, Cr, Fe, Mg, and Co. The alloy for forming the second layer 72 may be an alloy obtained by adding an additive element to Ni, Pd, Cu, Mn, Cr, Fe, Mg, and Co.

A combination of the first layer 71 and the second layer 72 is preferably Pd-Ni, Ni-Cu, Ni-Cr, Ni-Fe, Ni-Mg, and Ni-Co when types of elements are expressed as "first layer 71-second layer 72 (second layer 72-first layer 71)". When the second layer 72 is made of ceramics, the "first layer 71-second layer 72" is preferably Ni-SiC.

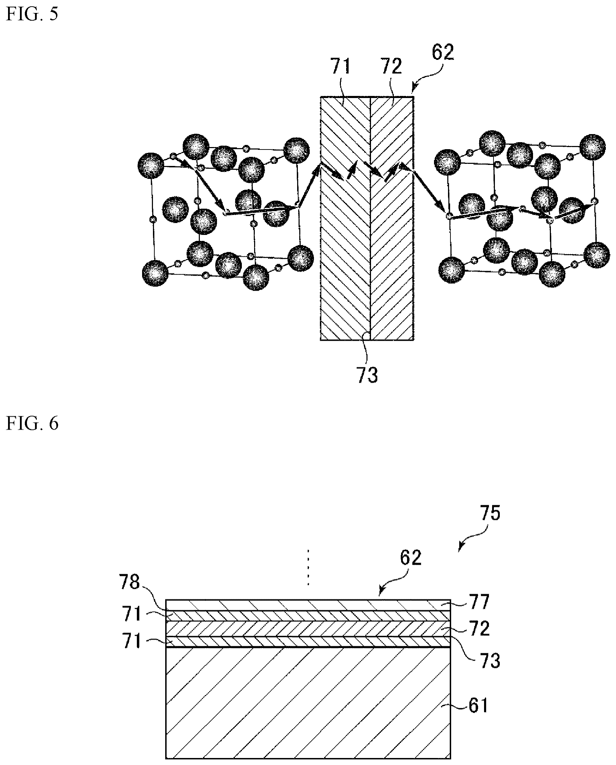

As illustrated in Fig. 5, hydrogen atoms permeate through the heterogeneous material interface 73. Fig. 5 is a schematic diagram illustrating a state in which hydrogen atoms in a metal lattice of the first layer 71 permeate through the heterogeneous material interface 73 and move to a metal lattice of the second layer 72 in the first layer 71 and the second layer 72 each made of a hydrogen storage metal having a face-centered cubic structure. It is known that hydrogen is light and hops in a manner of quantum diffusion in hydrogen-occupied sites (octahedral sites or tetrahedral sites) of substance A and substance B. Therefore, hydrogen occluded in the heat generating element 14 hops in the multilayer film 62 in a manner of quantum diffusion. In the heat generating element 14, hydrogen permeates through the first layer 71, the heterogeneous material interface 73, and the second layer 72 in a manner of quantum diffusion.

A thickness of each of the first layer 71 and the second layer 72 is preferably less than 1000 nm. When the thickness of each of the first layer 71 and the second layer 72 is 1000 nm or more, hydrogen is less likely to permeate through the multilayer film 62. When the thickness of each of the first layer 71 and the second layer 72 is less than 1000 nm, a nano-structure that does not exhibit a bulk property can be maintained. The thickness of each of the first layer 71 and the second layer 72 is more preferably less than 500 nm. When the thickness of each of the first layer 71 and the second layer 72 is less than 500 nm, a nano-structure that does not exhibit a bulk property at all can be maintained.

An example of a method for manufacturing the heat generating element 14 will be described. In this case, the plate-shaped support 61 is prepared, an evaporation device is used to make a hydrogen storage metal or a hydrogen storage alloy for forming the first layer 71 or the second layer 72 into a gas phase state, and then the first layer 71 and the second layer 72 are alternately formed on the front surface of the support 61 by aggregation or adsorption. Accordingly, the stacked body 14a having the multilayer film 62 on the front surface of the support 61 is formed. The first layer 71 and the second layer 72 are preferably formed continuously in a vacuum state. Accordingly, between the first layer 71 and the second layer 72, no natural oxide film is formed, and only the heterogeneous material interface 73 is formed. The evaporation device may be a physical evaporation device in which the hydrogen storage metal or the hydrogen storage alloy is evaporated by a physical method. The physical evaporation device is preferably a sputtering device, a vacuum evaporation device, and a chemical vapor deposition (CVD) device. The hydrogen storage metal or the hydrogen storage alloy may be deposited on the front surface of the support 61 by an electroplating method, and the first layer 71 and the second layer 72 may be alternately formed.

In Fig. 4, the multilayer film 62 is stacked on one surface (for example, the front surface) of the support 61, but is not limited thereto. The multilayer film 62 may be stacked on the other surface (for example, the back surface) of the support 61, or the multilayer film 62 may be stacked on both surfaces (the front surface and the back surface) of the support 61.

Hereinafter, the temperature adjustment unit T, the supply line L1, the discharge pipe 29, and the hydrogen recovery line L3, which are configurations other than the heat generating device main part 10, of the heat generating device 1 will be described with reference to Fig. 1.

(Temperature Adjustment Unit T)

The temperature adjustment unit T adjusts a temperature of the heat generating element 14 to maintain the heat generating element 14 at an optimum temperature (for example, 50°C to 1500°C) for heat generation, and includes the heater 12 (see Fig. 2), a power supply 20 that supplies power to the heater 12, a temperature sensor 21 such as a thermocouple that detects a temperature of the heater 12, and a control unit 22 that controls an output of the power supply 20 based on the temperature detected by the temperature sensor 21. The control unit 22 includes a CPU (Central Processing Unit) and a storage unit such as a ROM (Read Only Memory) and a RAM (Random Access Memory), and the CPU executes various types of arithmetic processing using programs, data, and the like stored in the ROM and the RAM.

(Supply Line L1)

The supply line L1 supplies low-temperature hydrogen and a heat medium from a supply pipe 23 into the sealed container 11, the supply pipe 23 extends from a discharge side of a circulation pump 24, and an end thereof is inserted into the sealed container 11 and opens at an upper portion of the sealed container 11.

A recovery pipe 25 extending from a heat utilization device (not illustrated) is connected to a suction side of the circulation pump 24, and a buffer tank 26, an electric pressure adjustment valve (pressure reducing valve) 27, and a filter 28 are provided in the supply pipe 23 extending from the discharge side of the circulation pump 24. The circulation pump 24 and the pressure adjustment valve 27 are electrically connected to the control unit 22, and operations of the circulation pump 24 and the pressure adjustment valve 27 are controlled by control signals output from the control unit 22. For example, a metal bellows pump is used as the circulation pump 24.

The buffer tank 26 serves to store the hydrogen and the heat medium and absorb fluctuations in flow rates of the hydrogen and the heat medium. The pressure adjustment valve 27 receives a control signal from the control unit 22 and adjusts an opening degree thereof, thereby achieving a function of adjusting the pressures of the hydrogen and the heat medium supplied from the buffer tank 26.

The filter 28 serves to remove impurities contained in the hydrogen and the heat medium. Here, the amount of hydrogen that permeates through the heat generating element 14 (hydrogen permeation amount) depends on the temperature of the heat generating element 14, a pressure difference between the inside and the outside of the heat generating element 14, and a front surface state of an outer peripheral surface of the heat generating element 14. However, when the impurities are contained in the hydrogen, the impurities may adhere to the outer peripheral surface of the heat generating element 14 and deteriorate the front surface state of the heat generating element 14. When the front surface state of the heat generating element 14 is deteriorated, adsorption and dissociation of hydrogen molecules on the surface of the multilayer film 62 of the heat generating element 14 are inhibited, and the hydrogen permeation amount decreases. Examples of impurities that hinder the adsorption and dissociation of hydrogen molecules on the surface of the multilayer film 62 of the heat generating element 14 include water (including steam), hydrocarbons (methane, ethane, methanol, ethanol, and the like), C, S, and Si.

The filter 28 removes water (including steam), hydrocarbons, C, S, Si, and the like as the impurities contained in the hydrogen and the heat medium, thereby preventing a decrease in the hydrogen permeation amount in the heat generating element 14.

(Discharge Pipe 29)

The discharge pipe 29 discharges, from the bottom of the sealed container 11 to the outside of the sealed container 11, the hydrogen-based gas in the sealed container 11 containing hydrogen (non-permeated hydrogen) that does not permeate through the heat generating element 14 housed in the sealed container 11. A processing unit 32a such as a hydrogen separator is provided in the discharge pipe 29 as necessary, and the hydrogen passing through the processing unit 32a is returned from a hydrogen pipe 33 to the recovery pipe 25.

(Hydrogen Recovery Line L3)

The hydrogen recovery line L3 is a line for returning the hydrogen-based gas containing hydrogen used for heat generation in the heat generating element 14 housed in the sealed container 11 to the recovery pipe 25, and is configured by connecting, to the recovery pipe 25, a hydrogen recovery pipe 31 extending upward from a header 30 connected to an upper end of the cylindrical support 61 of the heat generating element 14 through the upper portion of the sealed container 11. A lower end of the heat generating element 14 may be sealed or connected to a header (not illustrated).

(Operations of Heat Generating Device 1)

Next, operations of the heat generating device 1 configured as described above will be described.

When the circulation pump 24 is driven by a control signal from the control unit 22, the hydrogen-based gas discharged from the circulation pump 24 is introduced from the supply pipe 23 of the supply line L1 into the upper portion of the sealed container 11. While flowing through the supply pipe 23, the hydrogen-based gas has pressure fluctuations prevented by the buffer tank 26, and is depressurized to a predetermined value by the pressure adjustment valve 27.

The heater 12 (see Fig. 2) provided in the heat generating element 14 generates heat by power supplied from the power supply 20 and heats the heat generating element 14 to a predetermined temperature (for example, 50°C to 1500°C). As described above, the temperature of the heat generating element 14 is adjusted to an appropriate value by the control unit 22 controlling the output of the power supply 20 based on the temperature detected by the temperature sensor 21.

As described above, the hydrogen introduced into the sealed container 11 permeates through the multilayer film 62 of the heat generating element 14, flows upward, and then is introduced into the header 30. In the heat generating device 1, the hydrogen is supplied to the outside of each heat generating element 14, and the hydrogen (permeated hydrogen) inside each heat generating element 14 is discharged. Thus, a difference in hydrogen partial pressure is generated between the inside and the outside of each heat generating element 14, the hydrogen permeates through the multilayer film 62 of each heat generating element 14 due to the difference in hydrogen partial pressure, and each heat generating element 14 generates heat due to hydrogen permeation. Specifically, the hydrogen molecules are adsorbed on one surface (for example, a surface opposite to the support 61) of the multilayer film 62 of each heat generating element 14, and each of the hydrogen molecules is dissociated into two hydrogen atoms. The dissociated hydrogen atoms penetrate (are occluded) into the multilayer film 62, and the hydrogen atoms are recombined on the other surface (for example, a surface in contact with the support 61) of the multilayer film 62 and are released as hydrogen molecules. As described above, when the hydrogen atoms move from the surface of the multilayer film 62 to the inner peripheral surface, the hydrogen atoms permeate through the heterogeneous material interface 73 (see Fig. 5) by quantum diffusion, or the hydrogen atoms diffuse through the heterogeneous material interface 73 by quantum diffusion, and thus excess heat equal to or higher than the heating temperature can be generated in each heat generating element 14. In the heat generating device 1, the hydrogen may continuously permeate through each heat generating element 14, and the excess heat can be efficiently generated.

As described above, the hydrogen-based gas containing hydrogen used for heat generation of the heat generating element 14 by occluding in and discharging from the heat generating element 14 flows to the recovery pipe 25 through the hydrogen recovery pipe 31 via the header 30 and merges with the hydrogen-based gas flowing through the recovery pipe 25, and the hydrogen-based gas is pressurized by the circulation pump 24 and then introduced again into the sealed container 11 through the supply pipe 23.

Further, the hydrogen-based gas in the sealed container 11 containing hydrogen (non-permeated hydrogen) that does not permeate through the heat generating element 14 is discharged from the discharge pipe 29 to the outside of the sealed container 11, and is returned from the hydrogen pipe 33 to the recovery pipe 25 through the processing unit 32a such as a hydrogen separator.

The heat generated in the heat generating element 14 in the sealed container 11 is conducted by heat conduction in the space between the surface of the heater 12 and the inner peripheral surface of the partition wall 13, and mainly by radiation in a space between the outer peripheral surface of the partition wall 13 and the inner wall surface 11a of the sealed container 11, and is finally conducted to cooling water (heat medium) of a cooling device (not illustrated) provided on the outer periphery of the sealed container 11. The heat medium (cooling water) is transported to a heat utilization device (not illustrated), and the heat recovered by the heat medium is supplied to the heat utilization device.

Thereafter, the same operation as described above is repeated to allow the hydrogen-based gas to circulate through a closed loop, and in this process, the hydrogen-based gas is used for the heat generation of the heat generating element 14, and the heat medium (cooling water) that has recovered the heat generated in the heat generating element 14 is supplied to the heat utilization device, and the heat utilization device is driven by the heat. The cooling water (heat medium), whose temperature has decreased after being used to drive the heat utilization device, is returned to the cooling device again, and the same operation is repeated thereafter.

(Effects of Heat Generating Device 1)

According to the heat generating device 1 of the present embodiment, since the space surrounded by the surface of the heater 12, the surface of the heat generating element 14, and the inner peripheral surface of the partition wall 13 is filled with the thermally conductive substance 15 that does not inhibit hydrogen permeation, it is possible to heat each layer of the heat generating element 14 with the heat from the heater 12 while maintaining a small temperature difference between the layers of the heat generating element 14 including a plurality of layers. In addition, the inner wall surface 11a of the sealed container 11 is a surface subjected to the high emissivity treatment, and the outer peripheral surface of the partition wall 13 is a surface subjected to the high emissivity treatment, or the partition wall 13 is made of a material with an emissivity of 0.6 or more. The mechanism of heat conduction in the space between the outer peripheral surface of the partition wall 13 and the inner wall surface 11a of the sealed container 11 is mainly the heat conduction by radiation having a conductivity lower than that of the heat conduction by the heat conductive substance 15, and thus the heat can be conducted to the outside of the sealed container 11 while reducing the influence of the environmental temperature. From these, it is possible to secure the temperature of the heat generating element heated by the heater provided near the heat generating element while reducing the influence of the environmental temperature, to increase the number of layers of the heat generating element, and to increase the heat generating efficiency of the heat generating element.

(Heat Generating Method)

A heat generating method of the present embodiment can be implemented using the heat generating device 1 of the present embodiment. First, the heat generating element 14 is accommodated in the sealed container 11 having the inner wall surface 11a subjected to a high emissivity treatment, the heat generating element 14 having the multilayer film 62 formed on a front surface of each of a plurality of cylindrical supports 61, the multilayer film 62 generating heat by occluding and discharging hydrogen, the plurality of cylindrical supports 61 having different diameters and being made of at least one of a porous body, a hydrogen permeable film, and a proton conductor and arranged apart from each other in a circumferential direction. The columnar heater 12 is arranged at the center of the heat generating element 14, and the cylindrical partition wall 13 having the outer peripheral surface subjected to a high emissivity treatment or made of a material with an emissivity of 0.6 or more is provided between the inner wall surface 11a of the sealed container 11 and the outermost layer of the heat generating element 14 inside the sealed container 11. Next, the space surrounded by the surface of the heater 12, the surface of the heat generating element 14, and the inner peripheral surface of the partition wall 13 is filled with the thermally conductive substance 15 that does not inhibit hydrogen permeation. Subsequently, a gas containing hydrogen is supplied to the sealed container 11, the heat generating element 14 generates heat by occluding and discharging the hydrogen in the heat generating element 14, and the gas containing hydrogen used for heat generation is discharged.

(Effects of Heat Generating Method)

According to the heat generating method of the present embodiment, since the space surrounded by the surface of the heater 12, the surface of the heat generating element 14, and the inner peripheral surface of the partition wall 13 is filled with the thermally conductive substance 15 that does not inhibit hydrogen permeation, it is possible to heat each layer of the heat generating element 14 with the heat from the heater 12 while maintaining a small temperature difference between the layers of the heat generating element 14 including a plurality of layers. In addition, the inner wall surface 11a of the sealed container 11 is a surface subjected to the high emissivity treatment, and the outer peripheral surface of the partition wall 13 is a surface subjected to the high emissivity treatment, or the partition wall 13 is made of a material with an emissivity of 0.6 or more. The mechanism of heat conduction in the space between the outer peripheral surface of the partition wall 13 and the inner wall surface 11a of the sealed container 11 is mainly the heat conduction by radiation having a conductivity lower than that of the heat conduction by the heat conductive substance 15, and thus the heat can be conducted to the outside of the sealed container 11 while reducing the influence of the environmental temperature. From these, it is possible to secure the temperature of the heat generating element heated by the heater provided near the heat generating element while reducing the influence of the environmental temperature, to increase the number of layers of the heat generating element, and to increase the heat generating efficiency of the heat generating element.

The present invention is not limited to the above embodiment and can be modified as appropriate without departing from the scope of the present invention. Hereinafter, modifications of the embodiment will be described. In the drawings and description of modifications, the same or equivalent components and members as those of the embodiment are denoted by the same reference numerals. Descriptions overlapping with the embodiment will be omitted as appropriate, and configurations different from the embodiment will be mainly described.

[First Modification]

The heat generating device 1 includes a heat generating element 75 illustrated in Fig. 6 instead of the heat generating element 14. In the heat generating element 75 as illustrated in Fig. 6, the multilayer film 62 of the stacked body further has a third layer 77 in addition to the first layer 71 and the second layer 72. The third layer 77 is made of a hydrogen storage metal, a hydrogen storage alloy, or ceramics different from the first layer 71 and the second layer 72. A thickness of the third layer 77 is preferably less than 1000 nm. In Fig. 6, the first layer 71, the second layer 72, and the third layer 77 are stacked on the front surface of the support 61 in the order of the first layer 71, the second layer 72, the first layer 71, and the third layer 77. The first layer 71, the second layer 72, and the third layer 77 may be stacked on the front surface of the support 61 in the order of the first layer 71, the third layer 77, the first layer 71, and the second layer 72. That is, the multilayer film 62 has a stacking structure in which the first layer 71 is provided between the second layer 72 and the third layer 77. The multilayer film 62 preferably has one or more third layers 77. Similarly to the heterogeneous material interface 73, the hydrogen atoms permeate through a heterogeneous material interface 78 formed between the first layer 71 and the third layer 77.

The third layer 77 is made of, for example, any one of Ni, Pd, Cu, Cr, Fe, Mg, Co, an alloy thereof, SiC, CaO, $Y_2O_3$, TiC, $LaB_6$, SrO, and BaO. An alloy for forming the third layer 77 is preferably an alloy made of two or more of Ni, Pd, Cu, Cr, Fe, Mg, and Co. The alloy for forming the third layer 77 may be an alloy obtained by adding an additive element to Ni, Pd, Cu, Cr, Fe, Mg, and Co.

In particular, the third layer 77 is preferably made of any one of CaO, $Y_2O_3$, TiC, $LaB_6$, SrO, and BaO. In the heat generating element 75 having the third layer 77 made of any one of CaO, $Y_2O_3$, TiC, $LaB_6$, SrO, and BaO, an occluding amount of hydrogen is increased, an amount of hydrogen permeating through the heterogeneous material interface 73 and the heterogeneous material interface 78 is increased, and a high output of excess heat can be achieved. The thickness of the third layer 77 made of any one of CaO, $Y_2O_3$, TiC, $LaB_6$, SrO, and BaO is preferably 10 nm or less. Accordingly, the hydrogen atoms easily permeate through the multilayer film 62. The third layer 77 made of any one of CaO, $Y_2O_3$, TiC, $LaB_6$, SrO, and BaO may not be formed into a complete film shape and may be formed into an island shape. The first layer 71 and the third layer 77 are preferably formed continuously in a vacuum state. Accordingly, between the first layer 71 and the third layer 77, no natural oxide film is formed, and only the heterogeneous material interface 78 is formed.

A combination of the first layer 71, the second layer 72, and the third layer 77 is preferably Pd-CaO-Ni, Pd-$Y_2O_3$-Ni, Pd-TiC-Ni, Pd-$LaB_6$-Ni, Ni-CaO-Cu, Ni-$Y_2O_3$-Cu, Ni-TiC-Cu, Ni-$LaB_6$-Cu, Ni-Co-Cu, Ni-CaO-Cr, Ni-$Y_2O_3$-Cr, Ni-TiC-Cr, Ni-$LaB_6$-Cr, Ni-CaO-Fe, Ni-$Y_2O_3$-Fe, Ni-TiC-Fe, Ni-$LaB_6$-Fe, Ni-Cr-Fe, Ni-CaO-Mg, Ni-$Y_2O_3$-Mg, Ni-TiC-Mg, Ni-$LaB_6$-Mg, Ni-CaO-Co, Ni-$Y_2O_3$-Co, Ni-TiC-Co, Ni-$LaB_6$-Co, Ni-CaO-SiC, Ni-$Y_2O_3$-SiC, Ni-TiC-SiC, and Ni-$LaB_6$-SiC when types of elements are expressed as "first layer 71-third layer 77-second layer 72".

[Second Modification]

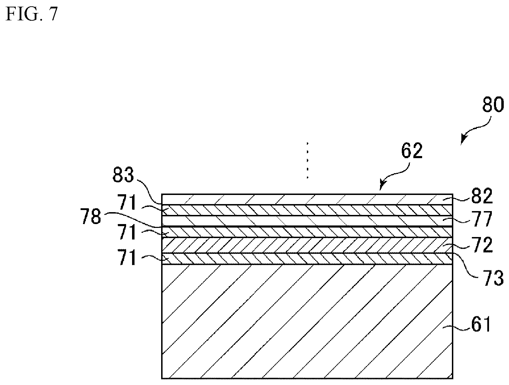

The heat generating device 1 includes a heat generating element 80 illustrated in Fig. 7 instead of the heat generating element 14. In the heat generating element 80 as illustrated in Fig. 7, the multilayer film 62 of the stacked body further has a fourth layer 82 in addition to the first layer 71, the second layer 72, and the third layer 77. The fourth layer 82 is made of a hydrogen storage metal, a hydrogen storage alloy, or ceramics different from the first layer 71, the second layer 72, and the third layer 77. A thickness of the fourth layer 82 is preferably less than 1000 nm. In Fig. 7, the first layer 71, the second layer 72, the third layer 77, and the fourth layer 82 are stacked on the front surface of the support 61 in order of the first layer 71, the second layer 72, the first layer 71, the third layer 77, the first layer 71, and the fourth layer 82. The first layer 71, the second layer 72, the third layer 77, and the fourth layer 82 may be stacked on the front surface of the support 61 in order of the first layer 71, the fourth layer 82, the first layer 71, the third layer 77, the first layer 71, and the second layer 72. That is, the multilayer film 62 has a stacking structure in which the second layer 72, the third layer 77, and the fourth layer 82 are stacked in any order and the first layer 71 is provided between the second layer 72 and the third layer 77, between the third layer 77 and the fourth layer 82, and between the second layer 72 and the fourth layer 82. The multilayer film 62 preferably has one or more fourth layers 82. Similarly to the heterogeneous material interface 73 and the heterogeneous material interface 78, the hydrogen atoms permeate through a heterogeneous material interface 83 formed between the first layer 71 and the fourth layer 82.

The fourth layer 82 is made of, for example, any one of Ni, Pd, Cu, Cr, Fe, Mg, Co, an alloy thereof, SiC, CaO, $Y_2O_3$, TiC, $LaB_6$, SrO, and BaO. An alloy for forming the fourth layer 82 is preferably an alloy made of two or more of Ni, Pd, Cu, Cr, Fe, Mg, and Co. The alloy for forming the fourth layer 82 may be an alloy obtained by adding an additive element to Ni, Pd, Cu, Cr, Fe, Mg, and Co.

In particular, the fourth layer 82 is preferably made of any one of CaO, $Y_2O_3$, TiC, $LaB_6$, SrO, and BaO. In the heat generating element 80 having the fourth layer 82 made of any one of CaO, $Y_2O_3$, TiC, $LaB_6$, SrO, and BaO, an occluding amount of hydrogen is increased, an amount of hydrogen permeating through the heterogeneous material interface 73, the heterogeneous material interface 78, and the heterogeneous material interface 83 is increased, and a high output of excess heat can be achieved. A thickness of the fourth layer 82 made of any one of CaO, $Y_2O_3$, TiC, $LaB_6$, SrO, and BaO is preferably 10 nm or less. Accordingly, the hydrogen atoms easily permeate through the multilayer film 62. The fourth layer 82 made of any one of CaO, $Y_2O_3$, TiC, $LaB_6$, SrO, and BaO may not be formed into a complete film shape and may be formed into an island shape. The first layer 71 and the fourth layer 82 are preferably formed continuously in a vacuum state. Accordingly, between the first layer 71 and the fourth layer 82, no natural oxide film is formed and only the heterogeneous material interface 83 is formed.

A combination of the first layer 71, the second layer 72, the third layer 77, and the fourth layer 82 is preferably Ni-CaO-Cr-Fe, Ni-$Y_2O_3$-Cr-Fe, Ni-TiC-Cr-Fe, and Ni-$LaB_6$-Cr-Fe when types of elements are expressed as "first layer 71-fourth layer 82-third layer 77-second layer 72".

As the heat generating element including a plurality of layers, two or more of the heat generating element 14 illustrated in Fig. 4, the heat generating element 75 illustrated in Fig. 6, and the heat generating element 80 illustrated in Fig. 7 may be mixed and used. For example, the heat generating element on an inner peripheral side and the heat generating element on an outer peripheral side may have different layer configurations. The heat generating elements having a plurality of layer configurations may be arranged in any order. A configuration of the multilayer film 62 such as a ratio of layer thicknesses, the number of layers of each layer, and a material may be appropriately changed according to a temperature to be used.

[Third Modification]

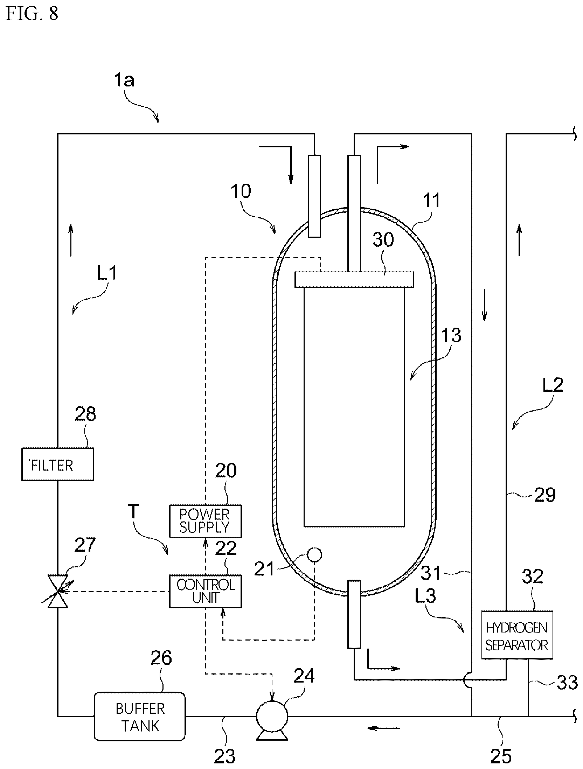

Fig. 8 is a block diagram illustrating a configuration of a heat generating device 1a according to this modification. The illustrated heat generating device 1a includes the heat generating device main part 10 that houses the heat generating element 14 inside the sealed container 11, the temperature adjustment unit T that adjusts a temperature of the heat generating element 14, the supply line L1 for supplying a hydrogen-based gas to the sealed container 11, a discharge line L2 for discharging the hydrogen-based gas in the sealed container 11, and the hydrogen recovery line L3 for returning to the supply line L1 and recovering hydrogen occluded in the heat generating element 14 and discharged from the heat generating element 14. The hydrogen-based gas includes a heat medium. The heat medium is preferably excellent in thermal conductivity and chemically stable, and examples thereof include a rare gas such as helium gas or argon gas, a hydrogen gas, a nitrogen gas, water vapor, air, carbon dioxide, and a gas forming hydride.

The discharge line L2 discharges a hydrogen-based gas containing hydrogen (non-permeated hydrogen) that does not permeate through the heat generating element 14 housed in the sealed container 11 from the discharge pipe 29 extending from the bottom of the sealed container 11 to the outside of the sealed container 11. The non-permeated hydrogen and the heat medium are heated to a high temperature by the heat generating element 14. The discharge pipe 29 is provided with a hydrogen separator 32 for separating the hydrogen and the heat medium, and the hydrogen separated by the hydrogen separator 32 is returned from the hydrogen pipe 33 to the recovery pipe 25. The heat medium from which the hydrogen has been separated and removed in the hydrogen separator 32 is transported to a heat utilization device (not illustrated), and the heat recovered by the heat medium is supplied to the heat utilization device.

Except for the above, this modification has a similar configuration to the heat generating device 1 of the above embodiment. The heat generating device 1 of the above embodiment has a configuration in which a cooling device (not illustrated) is provided on the outer periphery of the sealed container 11, whereas in this modification, the cooling device may not be provided. When the cooling device is provided, the heat can be recovered by conducting the heat to the cooling water as in the above embodiment.

According to the heat generating device 1a of this modification, it is possible to secure the temperature of the heat generating element heated by the heater provided near the heat generating element while reducing the influence of the environmental temperature, to increase the number of layers of the heat generating element, and to increase the heat generating efficiency of the heat generating element.

[Fourth Modification]

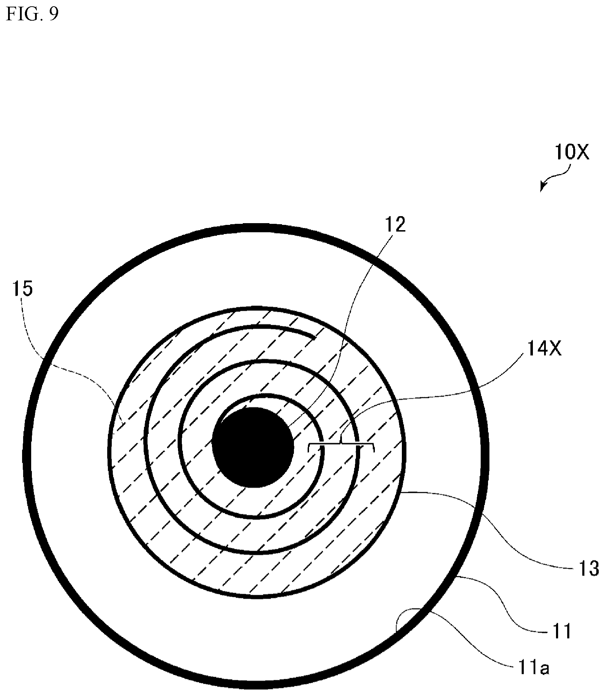

The heat generating element 14 is not limited to a plurality of cylindrical shapes having different diameters arranged apart from each other in a circumferential direction, and may have a spiral cross section with a larger diameter toward an outer peripheral side. Fig. 9 is a cross-sectional view of a heat generating device main part 10X that houses a heat generating element 14X inside the sealed container 11 according to this modification. The heat generating element 14X illustrated in Fig. 9 has a spiral cross section with a larger diameter toward an outer peripheral side. The number of turns of the heat generating element 14X is about the same as the number of layers of the heat generating element 14 illustrated in Fig. 2. Except for the above, this modification has a similar configuration to the heat generating device 1 of the above embodiment.

[First Experimental Example]

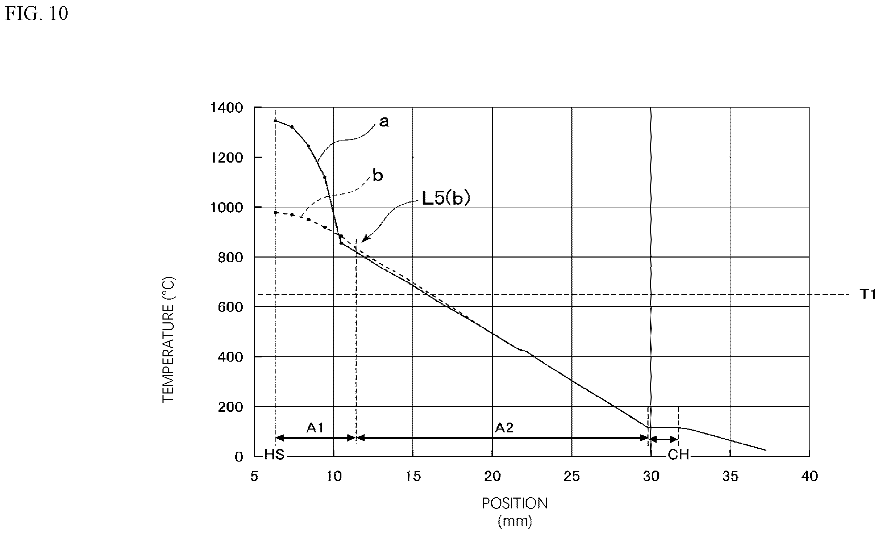

Fig. 10 is a graph illustrating a temperature profile determined through simulation in a sealed container of a heat generating device according to a first experimental example. In the heat generating device of the above embodiment, a temperature profile inside the sealed container during operation of the heat generating device was determined through simulation under such conditions that the number of layers of the heat generating element provided on the outer periphery of the heater was four, a partition wall was provided, which was a fifth layer counted from the heat generating element, a thermal conductivity of the thermally conductive substance filled in the space from the surface of the heater to the inner peripheral surface of the partition wall was 0.3 W/m/K, the emissivity of the inner wall surface of the sealed container was 0.45, the emissivity of the outer peripheral surface of the partition wall was 0.18, a heater output was 30 W, excess heat in a heat generating unit was 270 W, a cooling water flow rate was 0.6 L/min, and a cooling water temperature was 25°C. The results are shown in graph b in Fig. 10. A horizontal axis represents a position (mm) in the circumferential direction from the center of the heater to the sealed container, and a vertical axis represents a temperature (°C). Here, the inner wall surface of the sealed container and the outer peripheral surface of the partition wall are surfaces that are not subjected to a high emissivity treatment. Fig. 10 illustrates a surface HS of the heater, a region A1 from the surface HS of the heater to the inner peripheral surface of the partition wall, a region A2 from the outer peripheral surface of the partition wall to the inner peripheral surface of the sealed container, a position of a sealed container CH, and a temperature T1 sufficient for the heat generating element to generate heat by hydrogen permeation. The region A1 is a region where heat is conducted mainly by a thermally conductive substance, and the region A2 is a region where heat is conducted by radiation. Further, Fig. 10 illustrates a position L5(b) of the partition wall which is the fifth layer counted from the heat generating element in graph b.

In a heat generating device that differs from the above heat generating device showing the temperature profile of graph b only in that no partition wall is provided and no thermally conductive substance is filled, the temperature profile inside the sealed container during operation of the heat generating device was determined through simulation as in the above under such conditions of the heater output of 30 W, the excess heat in the heat generating unit of 270 W, the cooling water flow rate of 0.6 L/min, and the cooling water temperature of 25°C. The results are shown in graph a in Fig. 10.

A temperature at the position L5(b) of the partition wall, which is the fifth layer counted from the heat generating element in graph b, was higher than the temperature T1 sufficient for the heat generating element to generate heat by hydrogen permeation. In graph a, a temperature of the surface of the heater exceeded a heat-resistant temperature 1000°C of the heater. From the comparison between graphs a and b, by providing the partition wall and filling with the thermally conductive substance, even when the temperature of the surface of the heater was lowered by about 400°C, the heat generating element ensured a temperature equal to or higher than the temperature T1 sufficient to generate heat by the hydrogen permeation.

[Second Experimental Example]

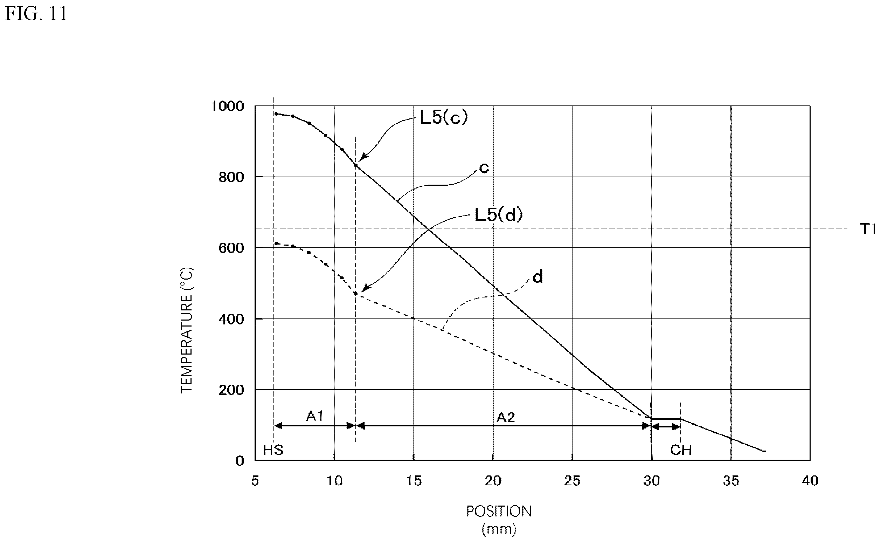

Fig. 11 is a graph illustrating a temperature profile determined through simulation in a sealed container of a heat generating device according to a second experimental example. Graph c in Fig. 11 is the same temperature profile as graph b in Fig. 10, and is a temperature profile during operation of the heat generating device under such conditions that in the heat generating device of the above embodiment, the number of layers of the heat generating element provided on the outer periphery of the heater was four, a partition wall was provided, which was a fifth layer counted from the heat generating element, a thermal conductivity of the thermally conductive substance filled in the space from the surface of the heater to the inner peripheral surface of the partition wall was 0.3 W/m/K, the emissivity of the inner wall surface of the sealed container was 0.45, the emissivity of the outer peripheral surface of the partition wall was 0.18, a heater output was 30 W, excess heat in a heat generating unit was 270 W, a cooling water flow rate was 0.6 L/min, and a cooling water temperature was 25°C. Here, the inner wall surface of the sealed container and the outer peripheral surface of the partition wall are surfaces that are not subjected to a high emissivity treatment. Fig. 11 illustrates a position L5(c) of the partition wall which is the fifth layer counted from the heat generating element in graph c.

In a heat generating device that differs from the above heat generating device showing the temperature profile of graph c only in that the emissivity of the inner wall surface of the sealed container was 0.9, the emissivity of the outer peripheral surface of the partition wall was 0.9, and the surfaces were made highly radiative by a blackening treatment, the temperature profile inside the sealed container during operation of the heat generating device was determined through simulation as in the above under such conditions of the heater output of 30 W, the excess heat in the heat generating unit of 270 W, the cooling water flow rate of 0.6 L/min, and the cooling water temperature of 25°C. The results are shown in graph d in Fig. 11. Fig. 11 illustrates a position L5(d) of the partition wall which is the fifth layer counted from the heat generating element in graph d.

A temperature at the position L5(d) of the partition wall, which is the fifth layer counted from the heat generating element in graph d, was lower than the temperature T1 sufficient for the heat generating element to generate heat by hydrogen permeation. From the comparison between graphs c and d, the emissivity of the inner wall surface of the sealed container was set to 0.9, the emissivity of the outer peripheral surface of the partition wall was set to 0.9, and the surfaces were made highly radiative by the blackening treatment, whereby the temperature of the surface of the heater was lowered by 300°C or higher. Since the temperature of the surface of the heater was lowered by 300°C or higher, it was confirmed that the number of layers and the number of turns of the heat generating element can be increased.

[Third Experimental Example]

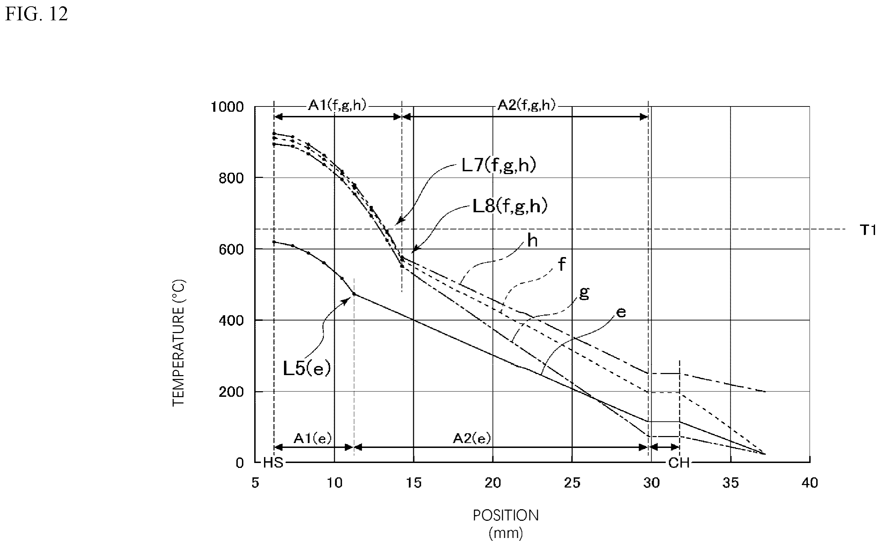

Fig. 12 is a graph illustrating a temperature profile determined through simulation in a sealed container of a heat generating device according to a third experimental example. Graph e in Fig. 12 is the same temperature profile as graph d in Fig. 11, and is a temperature profile during operation of the heat generating device under such conditions that in the heat generating device of the above embodiment, the number of layers of the heat generating element provided on the outer periphery of the heater was four, a partition wall was provided, which was a fifth layer counted from the heat generating element, a thermal conductivity of the thermally conductive substance filled in the space from the surface of the heater to the inner peripheral surface of the partition wall was 0.3 W/m/K, the emissivity of the inner wall surface of the sealed container was 0.9, the emissivity of the outer peripheral surface of the partition wall was 0.9, a heater output was 30 W, excess heat in a heat generating unit was 270 W, a cooling water flow rate was 0.6 L/min, and a cooling water temperature was 25°C. Here, the inner wall surface of the sealed container and the outer peripheral surface of the partition wall are surfaces subjected to high emissivity by a blackening treatment. Fig. 12 illustrates a region A1(e) from the surface HS of the heater to the inner peripheral surface of the partition wall and a region A2(e) from the outer peripheral surface of the partition wall to the inner peripheral surface of the sealed container, which correspond to graph e. The region A1(e) is a region where heat is conducted mainly by a thermally conductive substance, and the region A2(e) is a region where heat is conducted by radiation. Fig. 12 illustrates a position L5(e) of the partition wall which is the fifth layer counted from the heat generating element in graph e.

In a heat generating device that differs from the above heat generating device showing the temperature profile of graph e only in that the number of layers of the heat generating element is seven, the temperature profile inside the sealed container during operation of the heat generating device was determined through simulation as in the above under the conditions of the heater output of 30 W, the excess heat in the heat generating unit of 550 W, the cooling water flow rate of 0.6 L/min, and the cooling water temperature of 25°C. The results are shown in graph f in Fig. 12.

In a heat generating device that differs from the above heat generating device showing the temperature profile of graph f only in that the cooling water flow rate was 6 L/min, the temperature profile inside the sealed container during operation of the heat generating device was determined through simulation. The results are shown in graph g in Fig. 12.

In a heat generating device that differs from the above heat generating device showing the temperature profile of graph f only in that the cooling water temperature was 200°C, the temperature profile inside the sealed container during operation of the heat generating device was determined through simulation. The results are shown in graph h in Fig. 12.

Fig. 12 illustrates a region A1(f, g, h) from the surface HS of the heater to the inner peripheral surface of the partition wall and a region A2(f, g, h) from the outer peripheral surface of the partition wall to the inner peripheral surface of the sealed container, which correspond to graphs f, g, and h. The region A1(f, g, h) is a region where heat is conducted mainly by a thermally conductive substance, and the region A2(f, g, h) is a region where heat is conducted by radiation. Fig. 12 illustrates a position L7(f, g, h) of a heat generating element which is a seventh layer and a position L8(f, g, h) of a partition wall which is an eighth layer counted from the heat generating element in graphs f, g, and h.

In graphs f, g, and h, a temperature of a heat generating element on the inner peripheral side than the heat generating element which is the seventh layer was higher than the temperature T1 sufficient for the heat generating element to generate heat by hydrogen permeation, but in graphs f, g, and h, a temperature at the position L7(f, g, h) of the heat generating element which is the seventh layer and a temperature at the position L8(f, g, h) of the partition wall which is the eighth layer counted from the heat generating element were lower than the temperature T1 sufficient for the heat generating element to generate heat by hydrogen permeation. As illustrated in graphs f, g, and h, the excess heat can be increased by increasing the number of layers of the heat generating element from 4 to 7, and the temperature of the surface of the heater at this time remained at 1000°C or lower. The temperature and flow rate of the cooling water had little influence on the temperature of the heat generating element.

[Fourth Experimental Example]

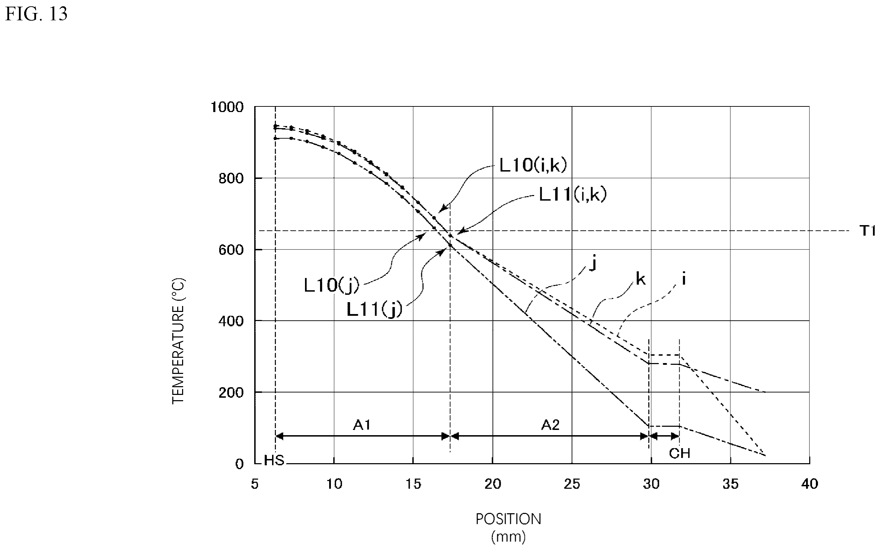

Fig. 13 is a graph illustrating a temperature profile determined through simulation in a sealed container of a heat generating device according to a fourth experimental example. In the heat generating device of the above embodiment, a temperature profile inside the sealed container during operation of the heat generating device was determined through simulation under such conditions that the number of layers of the heat generating element provided on the outer periphery of the heater was 10, a partition wall was provided, which was an eleventh layer counted from the heat generating element, a thermal conductivity of the thermally conductive substance filled in the space from the surface of the heater to the inner peripheral surface of the partition wall was 0.6 W/m/K, the emissivity of the inner wall surface of the sealed container was 0.9, the emissivity of the outer peripheral surface of the partition wall was 0.9, a heater output was 30 W, excess heat in a heat generating unit was 900 W, a cooling water flow rate was 0.6 L/min, and a cooling water temperature was 25°C. The results are shown in graph i in Fig. 13. Here, the inner wall surface of the sealed container and the outer peripheral surface of the partition wall are surfaces subjected to high emissivity by a blackening treatment.

In a heat generating device that differs from the above heat generating device showing the temperature profile of graph i only in that the cooling water flow rate was 6 L/min, the temperature profile inside the sealed container during operation of the heat generating device was determined through simulation. The results are shown in graph j in Fig. 13.

In a heat generating device that differs from the above heat generating device showing the temperature profile of graph i only in that the cooling water flow rate was 6 L/min and the cooling water temperature was 200°C, the temperature profile inside the sealed container during operation of the heat generating device was determined through simulation. The results are shown in graph k in Fig. 13.

Fig. 13 illustrates a position L10(i, k) of a heat generating element which is a tenth layer and a position L11(i, k) of the partition wall which is the eleventh layer counted from the heat generating element in graphs i and k. Further, Fig. 13 illustrates a position L10(j) of the heat generating element which is the tenth layer and a position L11(j) of the partition wall which is the eleventh layer counted from the heat generating element in graph j.

A temperature at the position L10(i, k) of the heat generating element which is the tenth layer in graphs i and k and a temperature at the position L10(j) of the heat generating element which is the tenth layer in graph j were higher than the temperature T1 sufficient for the heat generating element to generate heat by hydrogen permeation. As illustrated in graphs f, g, and h, the excess heat can be increased by increasing the number of layers of the heat generating element to 10, and the temperature of the surface of the heater at this time remained at 1000°C or lower. The temperature and flow rate of the cooling water had little influence on the temperature of the heat generating element.

The following is considered from the first to fourth experimental examples described above. In order to reduce a temperature difference between heat generating layers, it is preferable to increase the thermal conductivity of the thermally conductive substance filled in the space from the surface of the heater to the inner peripheral surface of the partition wall, for example, to be equal to a thermal conductivity of ceramics. A temperature of the outermost layer of the heat generating element is considered to depend on the amount of heat generated by the heat generating element, that is, the number of layers of the heat generating element, and thus it is preferable to increase the number of layers of the heat generating element in order to make the temperature of the outermost layer of the heat generating element higher than the temperature T1 sufficient for the heat generating element to generate heat by hydrogen permeation.

Although it is required to design the temperature of the heat generating element at an outermost peripheral position to be higher than the temperature T1 sufficient for the heat generating element to generate heat by hydrogen permeation even when the temperature is lowered due to an external influence of the sealed container, as a condition for lowering the temperature due to the external influence of the sealed container, for example, it is conceivable to increase the cooling water flow rate to 17 L/min (corresponding to 1 t/h) and set the cooling water temperature to 25°C.

[Fifth Experimental Example]

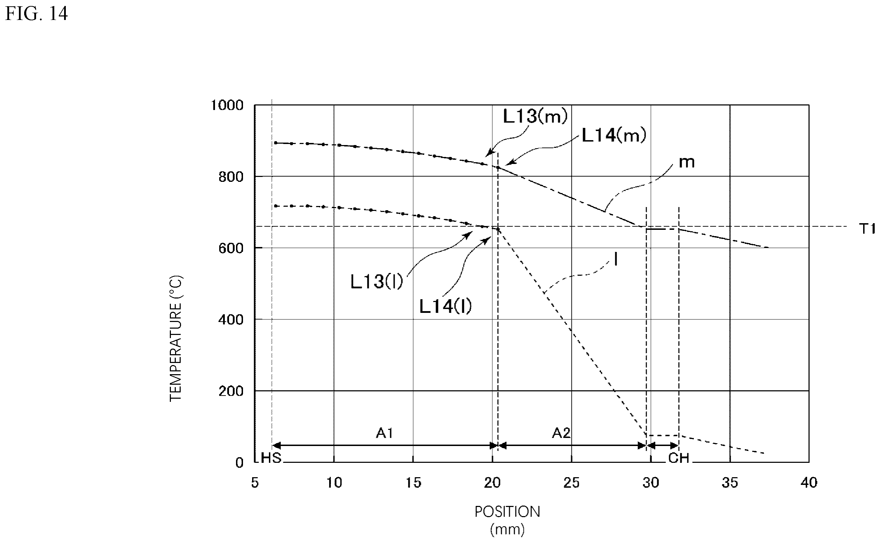

Fig. 14 is a graph illustrating a temperature profile determined through simulation in a sealed container of a heat generating device according to a fifth experimental example. In the heat generating device of the above embodiment, a temperature profile inside the sealed container during operation of the heat generating device was determined through simulation under such conditions that the number of layers of the heat generating element provided on the outer periphery of the heater was 13, a partition wall was provided, which was a fourteenth layer counted from the heat generating element, a thermal conductivity of the thermally conductive substance filled in the space from the surface of the heater to the inner peripheral surface of the partition wall was 4 W/m/K, the emissivity of the inner wall surface of the sealed container was 0.9, the emissivity of the outer peripheral surface of the partition wall was 0.9, a heater output was 0 W, excess heat in a heat generating unit was 1300 W, a cooling water flow rate was 17 L/min, and a cooling water temperature was 25°C. The results are shown in graph 1 in Fig. 14. Here, the inner wall surface of the sealed container and the outer peripheral surface of the partition wall are surfaces subjected to high emissivity by a blackening treatment.

In a heat generating device that differs from the above heat generating device showing the temperature profile of graph 1 only in that the cooling water temperature was 600°C, the temperature profile inside the sealed container during operation of the heat generating device was determined through simulation. The results are shown in graph m in Fig. 14.

Fig. 14 illustrates a position L13(l) of a heat generating element which is a thirteenth layer and a position L14(l) of the partition wall which is the fourteenth layer counted from the heat generating element in graph 1. Further, Fig. 14 illustrates a position L13(m) of the heat generating element which is the thirteenth layer and a position L14(m) of the partition wall which is the fourteenth layer counted from the heat generating element in graph m.

A temperature at the position L13(l) of the heat generating element which is the thirteenth layer in graph l and a temperature at the position L13(m) of the heat generating element which is the thirteenth layer in graph m were higher than the temperature T1 sufficient for the heat generating element to generate heat by hydrogen permeation. As illustrated in graph m, even when the cooling water temperature was 600°C, the temperature of the surface of the heater remained at 1000°C or lower.

Hereinafter, the thermal conductivity of the thermally conductive substance will be considered. When a fluid is in a single layer, an effective thermal conductivity of a filled layer when the fluid is stationary is represented by the following formula (1).

[Math. 1]

$$\frac{k_e^0}{k_f} = \varepsilon \left( 1 + \frac{h_{rv} d_p}{k_f} \right) + \frac{1 - \varepsilon}{\dfrac{1}{\xi} + \dfrac{2\,k_f}{3 k_p}} \qquad (1)$$

Here, $k_e^0$ is the effective thermal conductivity of the filled layer, $k_f$ is a thermal conductivity of a gas, $\varepsilon$ is an average porosity, $h_{rv}$ is a function of a porosity, emissivity of a filled material, and temperature, $d_p$ is an average particle diameter of the filled material, $\xi$ is a function of an average porosity, emissivity/average particle diameter of the filled material, temperature, and thermal conductivity of the gas, and $k_p$ is the thermal conductivity of the filled material.

The thermal conductivity of the filled layer when the filled layer is formed by filling particles and the gas is calculated as illustrated in Table 1. Here, the particles are made of silicon nitride, and $H_2$ and Ar are exemplified as the gas. Table 1 collectively illustrates a gas, a pressure (Pa) of the gas, a thermal conductivity of the gas (W/m/K), a thermal conductivity of particles (W/m/K), a filling rate of the particles, and a thermal conductivity of the filled layer (W/m/K).

[Table 1]

| Gas | Pressure (Pa) | Thermal conductivity of gas (W/m/k) | Thermal conductivity of particles (W/m/K) | Filling ratio (in the case of spheres) | Thermal conductivity of filled layer (W/m/K) |
|---|---|---|---|---|---|
| $H_2$ | 0.5 | $2.4 \times 10^{-3}$ | 24 | 0.74 | 0.25 |
| $H_2$ | 400 | 0.43 | 24 | 0.74 | 7.7 |
| Ar | 0.1 M | 0.039 | 24 | 0.74 | 1.5 |

As illustrated in Table 1, in the case of using silicon nitride particles and $H_2$, when $H_2$ is used at a high pressure of 400 Pa, the thermal conductivity of the filled layer is as high as 7.7 W/m/K. By selecting the type of gas and the composition of the particles, the thermal conductivity of, for example, about 4 W/m/K is in a sufficiently realizable range.

[Sixth Experimental Example]

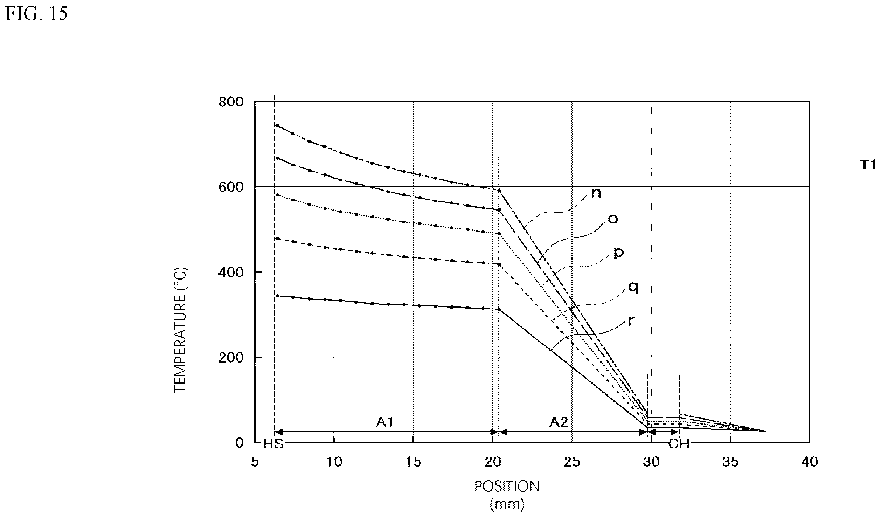

Fig. 15 is a graph illustrating a temperature profile determined through simulation in a sealed container of a heat generating device according to a sixth experimental example. In the heat generating device of the above embodiment, a temperature profile inside the sealed container at the start of heating by the heater (that is, at the time of excess heat of 0 W) was determined through simulation under such conditions that the number of layers of the heat generating element provided on the outer periphery of the heater was 13, a partition wall was provided, which was a fourteenth layer counted from the heat generating element, a thermal conductivity of the thermally conductive substance filled in the space from the surface of the heater to the inner peripheral surface of the partition wall was 4 W/m/K, the emissivity of the inner wall surface of the sealed container was 0.9, and the emissivity of the outer peripheral surface of the partition wall was 0.9. The heater output was 200 W to 1000 W, the cooling water flow rate was 17 L/min, and the cooling water temperature was 25°C. The results are shown at graphs n, o, p, q, and r in Fig. 15. The graph n corresponds to the heater output of 1000 W, graph o corresponds to the heater output of 800 W, graph p corresponds to the heater output of 600 W, graph q corresponds to the heater output of 400 W, and graph r corresponds to the heater output of 200 W. Here, the inner wall surface of the sealed container and the outer peripheral surface of the partition wall are surfaces subjected to high emissivity by a blackening treatment.

When the heater output was 1000 W, temperatures from the inner peripheral side to a heat generating element which is a sixth layer were higher than the temperature T1 sufficient for the heat generating element to generate heat by hydrogen permeation. The heat generating elements of the first to sixth layers on the inner peripheral side can generate heat, and the temperature of the heater increases. After the heat generation is started by the heating of the heater, it is conceivable to reduce the heater output such that the temperature of the heater does not exceed 1000°C and finally control the heater output to be 0 W.

[Seventh Experimental Example]

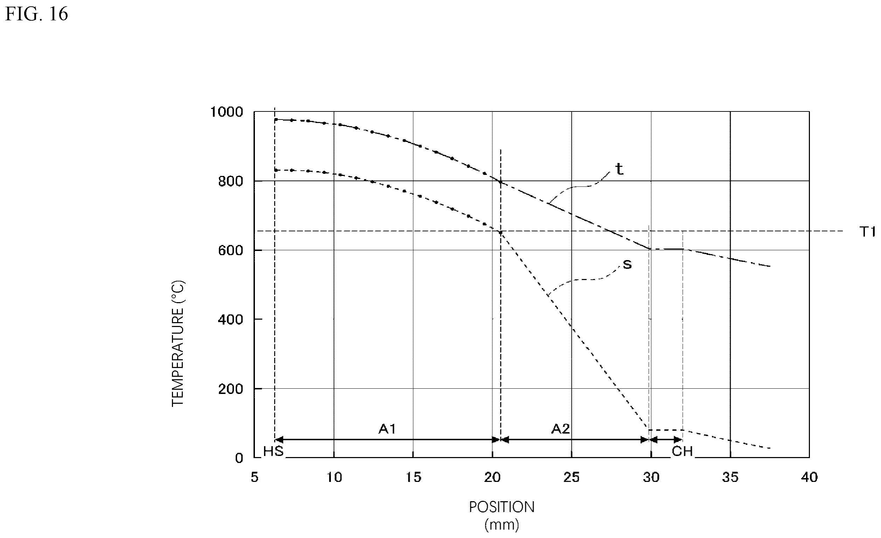

Fig. 16 is a graph illustrating a temperature profile determined through simulation in a sealed container of a heat generating device according to a seventh experimental example. In the heat generating device of the above embodiment, a temperature profile inside the sealed container during operation of the heat generating device was determined through simulation under such conditions that the number of layers of the heat generating element provided on the outer periphery of the heater was 13, a partition wall was provided, which was a fourteenth layer counted from the heat generating element, Ar was introduced into the sealed container at atmospheric pressure, a thermal conductivity of the thermally conductive substance filled in the space from the surface of the heater to the inner peripheral surface of the partition wall was 1.5 W/m/K, the emissivity of the inner wall surface of the sealed container was 0.9, the emissivity of the outer peripheral surface of the partition wall was 0.9, a heater output was 0 W, excess heat in a heat generating unit was 1300 W, a cooling water flow rate was 17 L/min, and a cooling water temperature was 25°C to 550°C. The results are shown in graphs s and t in Fig. 16. Graph s corresponds to the cooling water temperature of 25°C, and graph t corresponds to the cooling water temperature of 550°C. Here, the inner wall surface of the sealed container and the outer peripheral surface of the partition wall are surfaces subjected to high emissivity by a blackening treatment.

Excess heat generated in the heat generating element was not significantly different from the case where the thermal conductivity of the thermally conductive substance filled in the space from the surface of the heater to the inner peripheral surface of the partition wall was 4 W/m/K. The cooling water temperature is preferably 550°C or lower such that the heater does not exceed the heat-resistant temperature.

Reference Sign List

| | |
|---|---|
| 1, 1a | heat generating device |
| 10, 10X | heat generating device main part |
| 11 | sealed container |
| 12 | heater |
| 13 | partition wall |
| 14, 14X | heat generating element |
| 15 | thermally conductive substance |
| 20 | power supply |
| 21 | temperature sensor |
| 22 | control unit |
| 23 | supply pipe |
| 24 | circulation pump |
| 25 | recovery pipe |
| 26 | buffer tank |
| 27 | pressure adjustment valve |
| 28 | filter |
| 29 | discharge pipe |

| 30 | header |
|---|---|
| 31 | hydrogen recovery pipe |
| 32 | hydrogen separator |
| 32a | processing unit |
| 33 | hydrogen pipe |

**Claims**

1. A heat generating device comprising:

a heat generating element in which a multilayer film that generates heat by occluding and discharging hydrogen is formed on a surface of a support, the support being made of at least one of a porous body, a hydrogen permeable film, and a proton conductor, and the support including a plurality of cylinders having different diameters arranged apart from each other in a circumferential direction, or the support having a spiral cross section with a larger diameter toward an outer peripheral side;
a columnar heater provided at a center of the heat generating element;
a sealed container housing the heat generating element;
a cylindrical partition wall provided between an inner wall surface of the sealed container and an outermost layer of the heat generating element inside the sealed container;
a supply line that supplies a gas containing hydrogen to the sealed container; and
a discharge line that discharges the gas containing hydrogen used for heat generation in the heat generating element by occluding and discharging the hydrogen in the heat generating element, wherein
a space surrounded by a surface of the heater, a surface of the heat generating element, and an inner peripheral surface of the partition wall is filled with a thermally conductive substance that does not inhibit hydrogen permeation,
the inner wall surface of the sealed container is a surface subjected to a high emissivity treatment, and
an outer peripheral surface of the partition wall is a surface subjected to the high emissivity treatment, or the partition wall is made of a material with an emissivity of 0.6 or more.

2. The heat generating device according to Claim 1, wherein
the multilayer film includes a first layer that is made of a hydrogen storage metal or a hydrogen storage alloy and has a thickness of less than 1000 nm, and a second layer that is made of a hydrogen storage metal or a hydrogen storage alloy, which is different from that of the first layer, or ceramics and has a thickness of less than 1000 nm.

3. The heat generating device according to Claim 1, wherein
the thermally conductive substance is made of thermally conductive particles or a thermally conductive mesh.

4. The heat generating device according to Claim 1, wherein
the inner wall surface of the sealed container is a surface subjected to a blackening treatment.

5. The heat generating device according to Claim 1, wherein
an outer peripheral surface of the partition wall is a surface subjected to a blackening treatment.

6. A heat generating method comprising:

accommodating, in a sealed container having an inner wall surface subjected to a high emissivity treatment, a heat generating element in which a multilayer film that generates heat by occluding and discharging hydrogen is formed on a surface of a support, the support being made of at least one of a porous body, a hydrogen permeable film, and a proton conductor, and the support including a plurality of cylinders having different diameters arranged apart from each other in a circumferential direction, or the support having a spiral cross section with a larger diameter toward an outer peripheral side;
disposing a columnar heater at a center of the heat generating element;
providing a cylindrical partition wall between the inner wall surface of the sealed container and an outermost layer of the heat generating element inside the sealed container, the cylindrical partition wall having an outer peripheral surface subjected to the high emissivity treatment or being made of a material with an emissivity of 0.6 or more;
filling, with a thermally conductive substance that does not inhibit hydrogen permeation, a space surrounded by a surface of the heater, a surface of the heat generating element, and an inner peripheral surface of the partition wall; and

supplying a gas containing hydrogen to the sealed container, causing the heat generating element to generate heat by occluding and discharging the hydrogen in the heat generating element, and discharging the gas containing hydrogen used for heat generation.

FIG. 1

FIG. 2

FIG. 3

FIG. 4

FIG. 5

FIG. 6

FIG. 7

FIG. 8

FIG. 9

FIG. 10

EP 4 703 658 A1

FIG. 11

FIG. 12

FIG. 13

FIG. 14

EP 4 703 658 A1

FIG. 15

FIG. 16

## INTERNATIONAL SEARCH REPORT

| International application No. |
|---|
| **PCT/JP2024/016036** |

| A. | CLASSIFICATION OF SUBJECT MATTER |
|---|---|

*F24V 30/00*(2018.01)i
FI:   F24V30/00 302

According to International Patent Classification (IPC) or to both national classification and IPC

| B. | FIELDS SEARCHED |
|---|---|

Minimum documentation searched (classification system followed by classification symbols)

F24V30/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2022/158581 A1 (CLEAN PLANET INC.) 28 July 2022 (2022-07-28)<br>entire text, all drawings | 1-6 |
| A | WO 2023/032649 A1 (CLEAN PLANET INC.) 09 March 2023 (2023-03-09)<br>entire text, all drawings | 1-6 |
| A | WO 2022/234800 A1 (CLEAN PLANET INC.) 10 November 2022 (2022-11-10)<br>entire text, all drawings | 1-6 |
| A | WO 2021/200843 A1 (CLEAN PLANET INC.) 07 October 2021 (2021-10-07)<br>entire text, all drawings | 1-6 |
| A | JP 2022-186417 A (NISSAN MOTOR CO., LTD.) 15 December 2022 (2022-12-15)<br>entire text, all drawings | 1-6 |
| A | JP 05-060423 A (SANYO ELECTRIC CO., LTD.) 09 March 1993 (1993-03-09)<br>entire text, all drawings | 1-6 |

☐ Further documents are listed in the continuation of Box C.      ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **26 June 2024** | **09 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

| | International application No. |
|---|---|
| | **PCT/JP2024/016036** |

| Patent document cited in search report | | | Publication date (day/month/year) | Patent family member(s) | | | Publication date (day/month/year) |
|---|---|---|---|---|---|---|---|
| WO | 2022/158581 | A1 | 28 July 2022 | US | 2023/0194128 | A1 | |
| | | | | entire text, all drawings | | | |
| | | | | EP | 4206558 | A1 | |
| | | | | CN | 115943281 | A | |
| | | | | KR | 10-2023-0136018 | A | |
| WO | 2023/032649 | A1 | 09 March 2023 | CA | 3230217 | A1 | |
| | | | | entire text, all drawings | | | |
| | | | | JP | 2023-35265 | A | |
| | | | | CN | 117999240 | A | |
| WO | 2022/234800 | A1 | 10 November 2022 | EP | 4336123 | A1 | |
| | | | | entire text, all drawings | | | |
| | | | | JP | 2022-172992 | A | |
| | | | | CN | 117337371 | A | |
| WO | 2021/200843 | A1 | 07 October 2021 | US | 2023/0152009 | A1 | |
| | | | | entire text, all drawings | | | |
| | | | | JP | 2021-162227 | A | |
| | | | | EP | 4130605 | A1 | |
| | | | | CN | 115516256 | A | |
| JP | 2022-186417 | A | 15 December 2022 | (Family: none) | | | |
| JP | 05-060423 | A | 09 March 1993 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S56100276 A
- JP S58022854 A

- JP 6749035 B